# EUROPEAN PATENT APPLICATION

(11) **EP 0 732 520 A1**
(43) Date of publication of application: **18.09.1996**
(21) Application number: 96830062.4
(22) Date of filing: 13.02.1996
(51) Int. Cl.: F16D 59/00, H02K 7/102, E05F 15/10

(54) **A device for locking and braking opening systems**

(30) Priority: 15.03.1995 IT BO950104
(71) Applicant: APRIMATIC S.p.A., I-40059 Medicina (Bologna) (IT)
(72) Inventor: Generali, Gianni, 40055 Castenaso (Bologna) (IT)
(74) Representative: Lanzoni, Luciano

(57) **Abstract**

The present invention relates to a device (1) for locking and breaking opening systems which acts directly upon the driving shaft (2) of a geared motor (4) ; the device (1) acts independently of the system gear ratio and envisages a locking and braking action, obtained by at least one braking element (6), hinged to the driving shaft (2) of the geared motor (4) in such a way that it can move radially, held in contact with a cylindrical surface (5) with which it interacts through surface (5) with which it interacts through friction, by suitable means (7) which conteract the centrifugal force excercised on the element (6) when the driving shaft (2) rotates; in this way, when the geared motor (4) is disengaged, the braking element (6) is held against the cylindrical surface (5) with which it interacts through friction, thus locking and/or braking the driving shaft (2).

## Description

The present invention relates to a device for locking and braking opening systems, which may be used on power-driven systems.

A possible field of application for the present invention is that of sliding gates, although the present invention can, with suitable construction modifications, be applied to power-driven systems for doors, gates and similar apparatus, in which the closing structure is driven by a geared motor which, at its outfeed, has a driven shaft with suitable transmission parts designed to interact, during opening and closing operations, with a mobile closing structure, such as a gate, door, etc.

Systems of this type have an eleccric motor whose driving shaft, also called the fast shaft, thanks to a connection (which may be of the worm screw - helical gear type, or of the gear in series or other type), moves the driven shaft, which is also called the slow shaft and is keyed to a toothed wheel which is, in turn, engaged with a rack or a chain integral with the mobile structure.

At present, opening systems with geared motors may be of the reversible or irreversible type, depending on whether or not they can be opened by acting upon the mobile structure to which they are fitted.

The majority of so-called irreversible systems are obtained through the afore-mentioned worm screw - helical gear connection or, to a far lesser degree, have electric locks.

In some cases, above all to reduce production costs, the worm screw - helical gear connection is at least partly created using parts made of materials with poor meshing features. With materials of this type, generally plastics, the irreversibility of the system is not always guaranteed, especially for gear ratios which are not relatively high (e.g.: around 1:30).

Moreover, the known types of opening systems may have braking devices which operate on the geared motor electrically; thus providing an electric brake for the opening system. Alternatively, in the less technically advanced solutions which have no electric brake, a "spontaneous" stopping system is used, wherein slowing and stopping are obtained once the geared motor is disengaged, thanks to the fact that the system absorbs the residual kinetic energy of the mobile structure.

The present invention, as described in the claims, resolves the problem of providing a device for locking and braking opening systems by acting directly upon the driving shaft of the geared motor. The device disclosed operates independently of the system gear ratio and envisages locking and braking obtained with at least one braking element, hinged to the driving shaft of the geared motor in such a way that it can move radially, held in contact with a cylindrical surface with which it interacts through friction, by suitable means which counteract the centrifugal force exercised on the element itself when the driving shaft rotates.

In this way, when the geared motor is disengaged, the element (or a series of elements), is held against the cylindrical surface with which it interacts through friction, thus locking or braking the driving shaft.

An advantage of the present invention is, therefore, the fact that it is both a lock and a brake for the opening system.

The technical features of the present invention, in accordance with the said aims, are clearly described in the claims herein and the advantages of the invention are more clearly shown in the detailed description below, with reference to the accompanying drawings which illustrate an embodiment by way of example only, and in which:
- figure 1 is a side view with some parts shown in cross-section to better illustrate others, of an embodiment of the device disclosed, with a detail shown in two functionnal configurations;
- figure 2 is a plan view of the embodiment shown in figure 1;
- figure 3 is a schematic illustration of a possible application for the device disclosed;

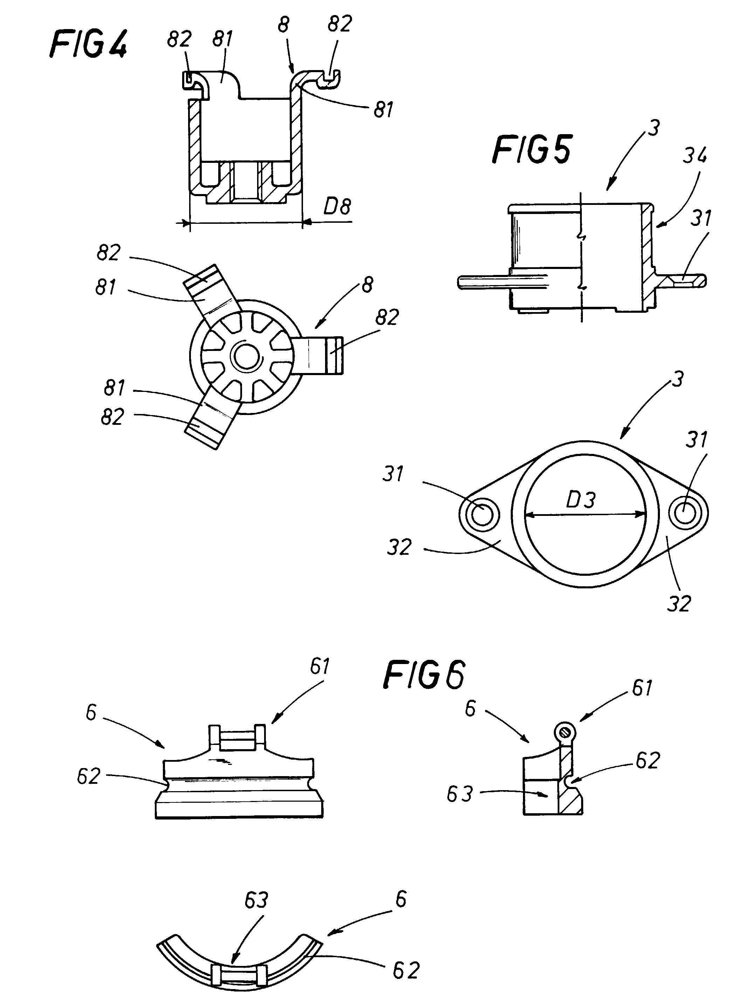

- figures 4, 5 and 6 are scaled-down right-angle views with some parts in cross-section, of details from the embodiment shown in figure 1.

With reference to the accompanying drawings, the device disclosed, indicated as a whole by the numeral 1, is a device for locking and braking opening systems of the type which have a geared motor 4 with a driving shaft 2 connected to transmission parts 9 for the movement of a mobile closing structure.

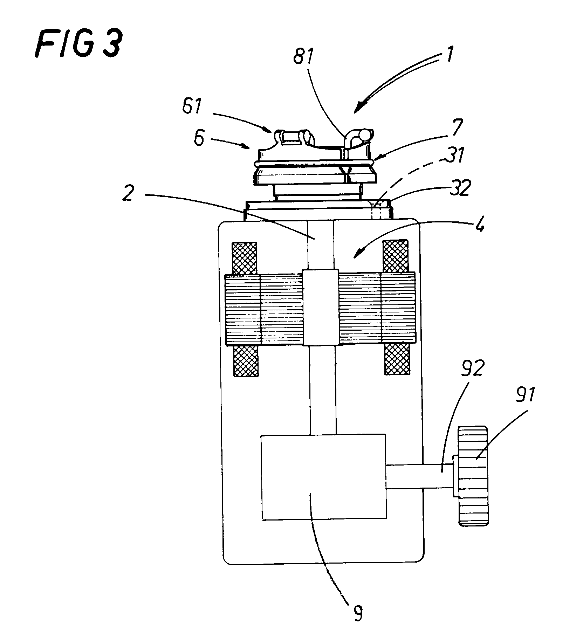

In figure 3, the transmission parts are schematically illustrated with a block 9 and pinion 91, since they may take various forms, regardless of the device in question.

The device 1 consists of a circular body 3, securely fixed relative to the geared motor 4, near to a section of the driving shaft 2.

In the embodiment shown, the circular body is positioned at a free end, that is to say, extension, of the driving shaft 2 at the opposite end to the connection with the driven shaft 92 (illustrated schematically only in figure 3). Obviously, the section of driving shaft upon which the device 1 acts may vary in accordance with its construction.

The external cylindrical surface 5 of the circular body 3 is coaxial with the driving shaft 2.

In the embodiment illustrated, the circular body 3 consists of a substantially cylindrical body which has two tabs 32 with seats 31 for screws 33 to fix it to the external structure of the geared motor 4. The external cylindrical surface 5 may consist of a ring whose surface has a relatively high friction coefficient, attached to a seat 34 in the circular body 3, or may be part of the circular body 3 itself.

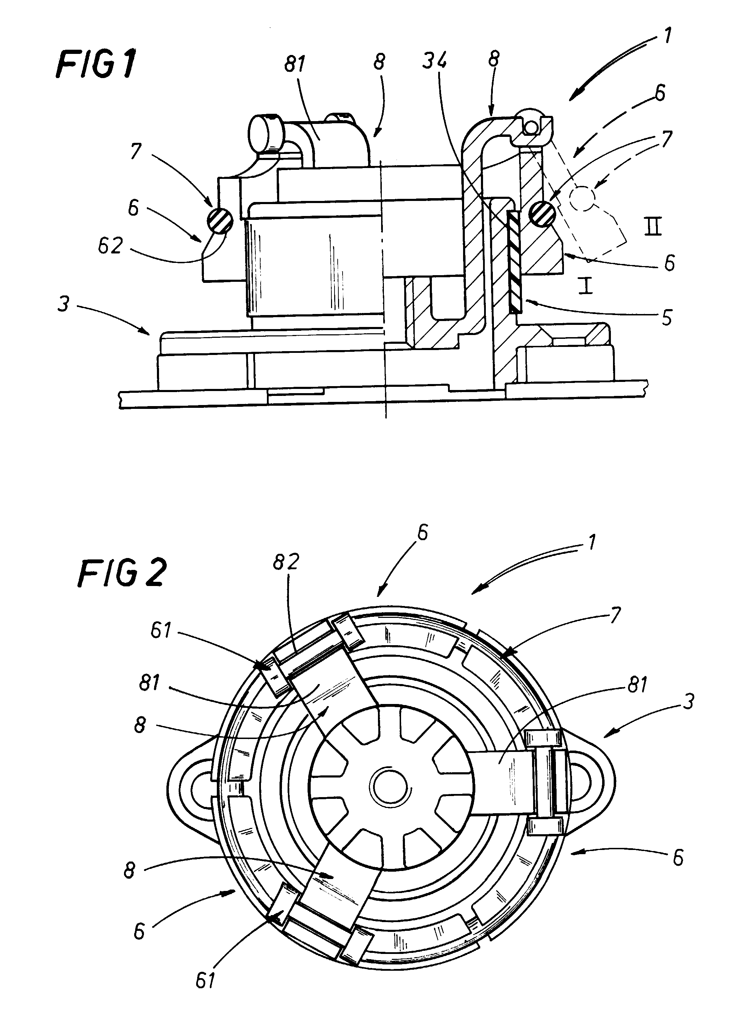

Moreover, at least one braking element 6 is envisaged, hinged to the driving shaft 2 in such a way that it can move radially relative to the driving shaft itself and, when set in a given position (indicated with I in figure 1) lies against the cylindrical surface 5 with a friction interaction.

The friction interaction between the braking element 6 and cylindrical surface 5 can be generated by a relatively high friction coefficient on the external cylindrical surface 5 or on the braking element 6, or both.

Means 7 are also envisaged, which counteract the centrifugal force to which the braking element 6 is subjected when the driving shaft 2 rotates, so as to prevent rotation of the driving shaft 2 when the geared motor 4 is disengaged.

When the geared motor is engaged and the driving shaft rotates, the braking element 6 is moved by centrifugal force from the position indicated with I to a second position II in which it does not interact with the cylindrical surface 5. In figure 1, this position is illustrated with a dashed line and is deliberately amplified relative to the minimum angle of non-interference between the braking element 6 and cylindrical surface 5.

In the embodiment shown in the accompanying drawings, a rotor body 8 is envisaged, keyed to the driving shaft 2 and having a series of suppcrt arms 81 which extend radially outwards from the cylindrical surface 5.

The arms 81 have a series of seats 82 designed to house the freely rotating ends 61 of a corresponding series of braking elements 6 (three in the example).

The rotor body 8 is substantially within the circular body 3, and has an external diameter D8 which is less than the internal diameter D3 of the circular body 3.

The counteracting means 7 may be a flexible ring which clamps the braking elements 6. The said ring may be made using a spiral spring, or a ring in another material with similar flexibility.

The resistance to stress, or flexibility constant, of the flexible ring 7 will vary according to the masses involved and the speed of the driving shaft 2.

The flexible ring 7 may be inserted in an external seat 62, that is to say, a race, envisaged on the exterior of the braking elements 6.

The braking elements 6 may have a cylindrical internal surface 63 which complements the external cylindrical surface 5. As already indicated, the friction between the braking elements 6 and the external cylindrical surface 5 can be obtained in various ways and, in the embodiment illustrated, it is the cylindrical internal surface 63 which touches against the external cylindrical surface 5 of the circular body 3.

From the point of view of operation of the device 1, as illustrated in the examples, when the geared motor 4 is disengaged, the flexible ring 7 holds the three braking elements 6 in contact with the external cylindrical surface 5.

Thanks to the friction in the contact between the internal surface 63 of the braking elements 6 and the external cylindrical surface 5 of the circular body 3, the driving shaft 2 cannot be made to rotate by operating on the end of the gear shaft, for example, an end pinion 91 in contact with a rack (not illustrated).

When the geared motor 4 is engaged, the centrifugal force which acts upon the braking elements 6 overcomes the resistance of the flexible ring 7, causing the braking elements 6 to move radially around a pivot defined by the seats 82 envisaged on the rotor body 8.

In this way, there is no further friction between the braking elements 6 an the external cylindrical surface 5, and the driving shaft 2 is, therefore, free of the circular bcdy 3 which supports the external cylindrical surface 5, so that the mobile closing structure can be moved using the geared motor.

When the geared motor is disengaged, the resistance of the flexible ring 7 overcomes the residual kinetic energy of the braking elements 6, and the latter are once more brought into contact with the external cylindrical surface 5, so that a relatively strong braking action is applied to the driving shaft 2 (and the closing structure), thus locking the driving shaft 2.

The present invention, thus designed for the said objects, may be subject to numerous variations, all encompassed by the original design concept, and all components may be substituted with technically equivalent parts.

## Claims

1. A device for locking and braking opening systems, of the type which has a geared motor with a driving shaft connected to transmission parts for the movement of a mobile closing structure, oharacterised in that it consists of a circular body (3) which is securely fixed relative to the geared motor (4) near to a section of the driving shaft (2), the circular body having an external cylindrical surface (5) coaxial to the driving shaft (2), and at least one braking element (6) hinged to the driving shaft (2) in such a way that it may move radially to the driving shaft (2) and, when so positioned, can lie against the cylindrical surface (5) with a friction interaction, having means (7) which counteract the centrifugal force to which the braking element (6) is subjected when the driving shaft (2) rotates, thus preventing rotation of the driving shaft (2) when the geared motor is disengaged.

2. The device as described in claim 1, characterised in that it consists of a plurality of braking elements (6) which are evenly positioned around the driving shaft (2), thus creating a total surface for interaction with the cylindrical surface (5) which extends substantially around the entire circumference.

3. The device as described in claim 1, characterised in that it includes a rotor body (8), keyed to the driving shaft (2) and having at least one support arm (81) which extends radially outwards from the cylindrical surface (5), having a seat (82) designed to house a freely rotating end (61) of the braking element (6).

4. The device as described in claim 1, characterised in that it includes a rotor body (8), keyed to the driving shaft (2) and having a series of support arms (81) which extend radially outwards from the cylindrical surface (5), having a series of seats (82) designed to house the freely rotating ends (61) of a corresponding series of braking elements (6).

5. The device as described in claim 2, characterised in that the counteracting means (7) consist of a flexible ring (7), coaxially fitted to the driving shaft (2) and clamping the braking elements (6).

6. The device as described in claim 1, characterised in that the circular body (3) consists of a substantially cylindrical body, having a number of tabs (32) with seats (31) for means (33) designed to fix it to the geared motor (4), and having an external cylindrical section (34) with high friction coefficient, to define the said external cylindrical surface (5).

7. The device as described in claim 1, characterised in that the circular body (3) consists of a substantially cylindrical body, having a number of tabs (32) with seats (31) for means (33) designed to fix it to the geared motor (4), and having an external cylindrical section (34) designed to house a stably attached ring which forms the said external cylindrical surface (5).

8. The device as described in claim 2, characterised in that the braking elements (6) have a cylindrical internal surface (63) which complements the external cylindrical surface (5) and an external seat (62) designed to house the counteracting means (7).

9. The device as described in claim 8, characterised in that the said cylindrical internal surface (63) is rough.

10. The device as described in claim 1, characterised in that the external cylindrical surface (5) is formed by the external surface of a ring keyed to the said circular body (3), made with a high friction coefficient.

11. The device as described in claim 1, characterised in that it includes a rotor body (8), having a first external diameter (D8), keyed to the driving shaft (2) and having a series of support arms (81) which extend radially outwards from the cylindrical surface (5), and having a series of seats (82) designed to constitute a pivot and allowing the radial freedom of movement of a series of braking elements (6), said circular body (3) having an internal diameter (D3) greater than the said first external diameter (D8) and being positioned coaxial to the rotor body (8), so that the cylindrical internal surfaces (63) of the braking elements (6) are made to lie against the cylindrical surface (5) in the absence to centrifugal force, that is to say, when the driving shaft (2) is not rotating.
